# EUROPÄISCHE PATENTSCHRIFT

(11) **EP 0 749 680 B1**
(45) Veröffentlichungstag und Bekanntmachung des Hinweises auf die Patenterteilung: **17.11.1999**
(21) Anmeldenummer: 96110041.9
(22) Anmeldetag: 21.06.1996
(51) Int. Cl.: A01D 78/10, A01B 73/02

(54) **Heuwerbungsmaschine**
Hay making machine
Machine de fenaison

(30) Priorität: 21.06.1995 DE 19522511; 22.09.1995 DE 19535304
(43) Veröffentlichungstag der Anmeldung: 27.12.1996
(73) Patentinhaber: Alois Pöttinger Maschinenfabrik GmbH, A-4710 Grieskirchen (AT)
(72) Erfinder: Leposa, Wolfgang, Ing., 4710 Grieskirchen (AT); Mairhuber, Josef, 4722 Peuerbach (AT); Rauscher, Sigurd, Ing., 4710 Grieskirchen (AT)
(74) Vertreter: Dupal, Helmut, Dipl.-Ing.

(56) Entgegenhaltungen:
- EP-A- 0 165 638
- EP-A- 0 291 812
- EP-A- 0 369 308
- EP-A- 0 391 093

## Beschreibung

Die Erfindung betrifft eine Heuwerbungsmaschine mit einem aus untereinander verschwenkbaren Rahmenteilen bestehenden Maschinenrahmen an dem eine größere Anzahl von mehr als sechs Rechrädern angebracht sind, die mit dem Rahmen von einer quer zur Fahrtrichtung ausgericheten Arbeitslage in eine zusammengeschwenkte Transportlage verbringbar sind, wobei der Antriebsstrang dabei nicht unterbrochen werden muß, mit den Merkmalen des Oberbegriffes des Anspruches 1.

Bei Heuwerbungsmaschinen der vorstehend genannten Art ist es wegen des bedeutenden Gewichtes der Maschinen nicht mehr günstig, alle seitlichen Rahmenteile nach oben zu verschwenken, auch ist es dann schwierig, die Höhe der Maschine in Transportlage auf ein für Durchfahrten geeignetes Höhenmaß zu begrenzen.

Es werden daher gewöhnlich nach den beiden innersten Rechrädern die Rahmenteile nach hinten verschwenkt und beim nächsten Rahmengelenk nach oben und dann, je nach der Zahl der weiteren Rahmenteile und deren Abmessungen, in verschiedener Weise nach innen, nach vorne oder nach hinten.

Die Verschwenkung nach hinten zwingt dazu, den Rahmen durch ein Gelenk zu öffnen und damit den Antriebsstrang, der zumeist im Inneren des Maschinenrahmens angeordnet ist, zu unterbrechen, wodurch beim Rückschwenken des Maschinenrahmens in die Arbeitslage darauf geachtet werden muß, daß die Kupplung der Rahmenteile wieder in der richtigen Stellung der Zinken der Rechräder zueinander erfolgt.

Selbst wenn die Öffnung des Antriebsstranges durch Anwendung geeigneter Antriebsverbindungen vermieden werden kann, wird durch die Anordnung des Gelenkes, in Bezug auf das erste verschwenkte Rechrad, dessen Abstand zu dem gegenüberliegenden Rechrad in der Transportlage stark verringert, sodaß es zu Schwierigkeiten durch Ineinandergreifen der Rechradarme und der Rechzinken der Rechräder kommen kann.

Solche Rahmengelenke sind wegen der Größe und des Gewichtes der Maschinen und der damit verbundenen Belastungen überdies störanfällig, wenn sie nicht aufwendig gebaut sind.

Aus der EP 0 165 638 A ist eine solche Maschine zum Zetten von auf dem Boden liegenden Halm- und Blattgut bekannt geworden, bei der ein Rahmen, der an einen Traktor angekuppelt werden kann, mit zwei ersten Tragarmen versehen ist, die an den gegenüberliegenden Seiten angebracht sind und die in Bezug auf den Rahmen in einer waagerechten Ebene um vertikale Schwenkachsen zwischen einer Arbeitslage quer zur Längsachse des Traktors und einer Transportlage in der diese parallel dazu ausgerichtet sind, verschwenkt werden können. An den Enden der ersten Tragarme sind zweite Tragarme, in gerader Linie zu diesen, um horizontale Schwenkachsen in einer Vertikaleben verschwenkbar angelenkt und sind in der Transportlage der Maschine nach oben abgewinkelt verschwenkt. Die ersten und die zweiten Tragarme sind miteinander über einen, die Verbindung, insbesonders die Antriebsverbindung öffnenden Kupplungsriegel schwenkbar verbunden.

Die vorhergehend erläuterten Vorbehalte sind auf die vorstehend beschriebene Maschine in vollem Umfang anzuwenden.

In der EP 0 391 093 A ist ein Kreiselheuer mit mehr als sechs Rechrädern beschrieben, bei dem ein Hauptrahmen einen Anbaubock trägt und mit zwei Rechrädern versehen ist. Der Hauptrahmen trägt seitlich, beiderseits zwei innere Hilfsrahmen mit je einem Rechrad, die um eine senkrechte Schwenkachse schwenkbar und feststellbar und um eine waagrechte Schwenkachse schwenkbar angelenkt sind. An den inneren Hilfsrahmen sind mittlere Hilfsrahmen und an diesen äußere Hilfsrahmen um waagrechte Schwenkachsen schwenkbar gelenkig verbunden. Die vertikalen Schwenkachsen zwischen Hauptrahmen und den inneren Hilfsrahmen liegen auch bei dieser Maschine seitlich von der Drehachse der Rechräder des Hauptrahmens versetzt, sodaß sich auch hier die Abstände zwischen den Rechrädern und deren Arbeitswerkzeuge beim Verschwenken zwischen Arbeits- und Transportlage beachtlich verändern und die Drehbarkeit des Antriebsstranges in Transportlage eingeschränkt, wenn nicht ganz unterbunden ist.

Die vorher beschriebenen Nachteile dieser Anordnungen betreffen auch die vorstehend beschriebene Maschine.

Aufgabe der Erfindung ist es, bei einer Maschine der genannten Art die Verschwenkbarkeit der Maschinenrahmenseitenteile zu verbessern, ohne den Antriebsstrang zu unterbrechen, oder den Maschinenrahmen öffnen zu müssen.

Diese Aufgabe wird bei einer Maschine nach dem Gattungsbegriff des Anspruches 1 mit den Merkmalen des kennzeichnenden Teiles des Anspruches 1 gelöst. Die Unteransprüche, die ebenso wie Anspruch 1, gleichzeitig einen Teil der Beschreibung bilden, betreffen besonders vorteilhafte Ausgestaltungen der Erfindung.

Durch die Einschaltung eines beiderseits angelenkten Zwischenstückes zwischen dem Mittelrahmen und dem innersten Maschinenrahmenteil jedes Maschinenrahmenseitenteiles wird eine anpassungsfähige Verbindung zwischen diesen Rahmenteilen geschaffen, die die Beibehaltung der Antriebsverbindung zwischen dem Hauptgetriebe und den innersten Rechradgetrieben in allen Schwenklagen des Maschinenrahmens gestattet, wobei besonders vorteilhaft die verdrehbare und verschwenkbare Anordnung des Zwischenstückes ist, mit der die Anpassung an die unterschiedlichen Verschwenkstellungen des Maschinenrahmens und an Bodenunebenheiten vollständig möglich ist. Die einfache und zweckmäßige Gestaltung der Anordnung des Zwischenstückes besteht dabei in der Art seiner Lagerung, zuerst an einer Hochachse verdrehbar am Mittelrahmen und dann an einer liegenden Schwenkachse am innersten Maschinenrahmenteil, und im besonderen am innersten Rechradgetriebe, wodurch eine mechanisch günstige, einfache Ausführungsform geschaffen wird.

Die gabelförmige Ausbildung des Zwischenstückes bildet eine mechanisch besonders vorteilhafte Schwenkverbindung mit dem Maschinenrahmenseitenteil, die wegen der verhältnismäßig großen angreifenden Kräfte vorteilhaft ist. Gleichzeitig wird mit dieser Anordnung die Verschwenkbarkeit für die Bodenanpassung der Maschine geschaffen.

Die schneidende Anordnung der waagrechten Schwenkachse des Zwischenstückes und seiner Hochachse ergibt eine konstruktiv besonders einfache Ausbildung dieser Gelenksverbindung.

Durch die fluchtende Anordnung der Hochachse und der Antriebsachse des innersten Rechradgetriebes bleibt der Abstand zwischen den innersten Rechrädern der beiden Maschinenrahmenseitenteile beim Verschwenken zwischen Arbeits- und Transportlage gleich, sodaß keine Behinderung durch Verkeilen von Rechradarmen oder Rechzinken auftreten kann.

Bei Anordnung der Hochachse im Bereich um die Antriebsachse des ersten Rechrades herum nähern oder entfernen sich die innersten Rechräder der beiden Maschinenrahmenseitenteile beim Verschwenken, je nach der Anordnung der beiden Achsen zueinander.

Es kann dadurch ein zusätzlicher Ausgleich in Bezug auf die Transportbreite der Maschine geschaffen werden.

Ein einfache und stabile Antriebsanordnung wird mit der Anordnung von parallelen Antriebswellenverbindungen zwischen Hauptgetriebe und den innersten Rechradgetrieben geschaffen.

Eine andere einfache und kostengünstige Antriebsverbindung besteht in der Anwendung eines Zahnriemen- oder Kettenantriebes, wobei hier mehrere vorteilhafte Gestaltungsmöglichkeiten bestehen, mit denen sehr zuverlässige Antriebsvarianten verwirklichbar sind.

Eine besonders zuverlässige und störungsfreie Antriebsanordnung wird durch die Anwendung von Gelenkwellen als Antriebsverbindung zwischen dem Hauptgetriebe und den innersten Rechradgetrieben ermöglicht.

Bei Ausstattung des innersten Rechradgetriebes in einer abgewandelten Form, mit einem zusätzlichen Kegelzahnrad, das mit einem Gelenkwellenanschluß für die Gelenkwelle des Hauptgetriebes auf Antrieb verbunden ist, kann es bei zu großer Abwinkelung der Gelenkwelle bei der Verschwenkung des Maschinenrahmenteiles in die Transportstellung notwendig sein, den Antriebsstrang in einer bestimmten Drehstellung festzulegen.
Dies kann durch eine Schaltanordnung geschehen, die das Hauptgetriebe bei Verdrehung des innersten Rechradgetriebes in die Transportlage festlegt und beim Rückschwenken in die Arbeitslage wieder löst.

Bei Verwendung eines Verdrehgetriebes für das erste Rechradgetriebe kann diese Maßnahme entfallen, weil der Antriebsstrang dann in jeder Verdrehstellung des Getriebes leicht drehbar verbleibt.

Bei der Anwendung eines Verdrehgetriebes, bei dem der unverschwenkbare Teil des innersten Rechradgetriebes mit einem verdrehbaren Winkelgetriebe auf Antrieb ineinander verdrehbar gelagert verbunden ist, wird eine einfache Lösung für die Erhaltung der Zuordnung der Antriebskupplung, insbesonders des Gelenkwellenanschlusses des unverdrehbaren Getriebeteiles zum Antriebsstrang des Hauptgetriebes, durch die Anwendung eines Anschlages oder durch die Befestigung des verdrehbaren Getriebeteiles am Mittelrahmen der Maschine erhalten.

Eine sehr vorteilhafte Ausführungsform des Hauptgetriebes wird erhalten, wenn dieses über eine Flanschverbindung mit einem der beiden innersten Rechradgetriebe verbunden wird, wobei die Antriebsverbindung zwischen diesen Getrieben über eine innere Antriebsverbindung aus einer lagefest gelagerten Getriebewelle hergestellt ist.

Der Antrieb des anderen Rechradgetriebes erfolgt über eine Antriebsverbindung gelenkig in Form einer Doppelgelenkwelle, die an den Antriebskupplungen der beiden verbundenen Getriebe angeschlossen ist.

Der Antrieb vom Zugfahrzeug her geschieht mit einer Doppelgelenkwelle, die entweder direkt an der Zapfwelle des Zugfahrzeuges oder an einem Zwischengetriebe oder einer Zwischenlagerung, das(die) an der Verbindungsvorrichtung der Maschine angeschlossen ist.

Durch diese Anordnung wird eine äußere Antriebsverbindung zwischen Hauptgetriebe und einem innersten Rechradgetriebe eingespart. Besonders vereiinfachend ist dabei die Anbringung des Hauptgetriebes unterhalb des Mittelrahmens des Maschinenrahmens in gleicher Höhe wie das mit ihm verflanschte innerste Rechradgetriebe und besonders günstig für die Gelenkwellenverbindung ist die Ausrichtung Antriebskupplung für den Antrieb des anderen Rechradgetriebes auf dessen Antriebskupplung. Die seitliche Versetzung des Hauptgetriebes bis zu dem mit ihm verbundenen Rechradgetriebe ergibt genügend Abstand für diese Antriebsverbindung und zusätzlich ermöglicht die Lage des Hauptgetriebes und dessen nach vorne ausgerichteter Gelenkwellenanschluß für das Zugfahrzeug eine geringere Abwinkelung dieser Antriebsverbindung.

Es ist weiters baulich vereinfachend, wenn das Hauptgetriebe zusammen mit dem Rechradgetriebe in ein gemeinsames Getriebegehäuse eingebaut ist.

Eine besonders einfache Gestaltung des Hauptgetriebes ergibt sich, wenn dieses in Richtung auf das Zugfahrzeug nach vorne verlagert ist, sodaß die Antriebskupplungen für die Antriebsverbindungen der beiden innersten Rechradgetriebe der Maschinenrahmenseitenteile auf der einen Seite des Getriebes und der Gelenkwellenanschluß für den Antrieb durch das Zugfahrzeug auf der gegenüberliegenden Seite des Getriebes angeordnet sind.

Je nach Lage von Hauptgetriebe und den innersten Rechradgetrieben zueinander, kann auch eine winkelige Anordnung der beiden Gelenkwellenanschlüsse für die innersten Rechradgetriebe vorteilhaft sein und bei der Lage des Hauptgetriebes genau zwischen diesen, was bei genügendem Abstand der innersten Rechradgetriebe voneinander möglich ist, ist die Anbringung der beiden Gelenkwellenanschlüsse am Hauptgetriebe, seitlich gegenüberliegend, sinnvoll.

Das Hauptgetriebe wird vorteilhafterweise in der Längsmittelebene der Maschine am Mittelrahmen oder unter dem Zugbalken an diesem angebracht, wobei, wie bereits erwähnt, der Abstand von den innersten Rechradgetrieben vor allem von der Lage und Anordnung der verbindenden Antriebsverbindungen, insbesonders von Gelenkwellen, in Arbeitslage und Transportlage des Maschinenrahmens, bestimmt wird.

Durch die Anordnung des innersten Rechrades am inneren Ende des inneren Maschinrahmenteiles ist es möglich, das nach außen zu benachbarte Rechrad an diesem gleichen Maschinenrahmenteil anzubringen und das erste Gelenk zwischen den Maschinenrahmenteilen erst danach nach außen zu anzuordnen.

Die Erfindung wird nachstehend anhand der Zeichnung einiger wesentlicher Ausführungsformen der Erfindung beschrieben.

Es zeigen:

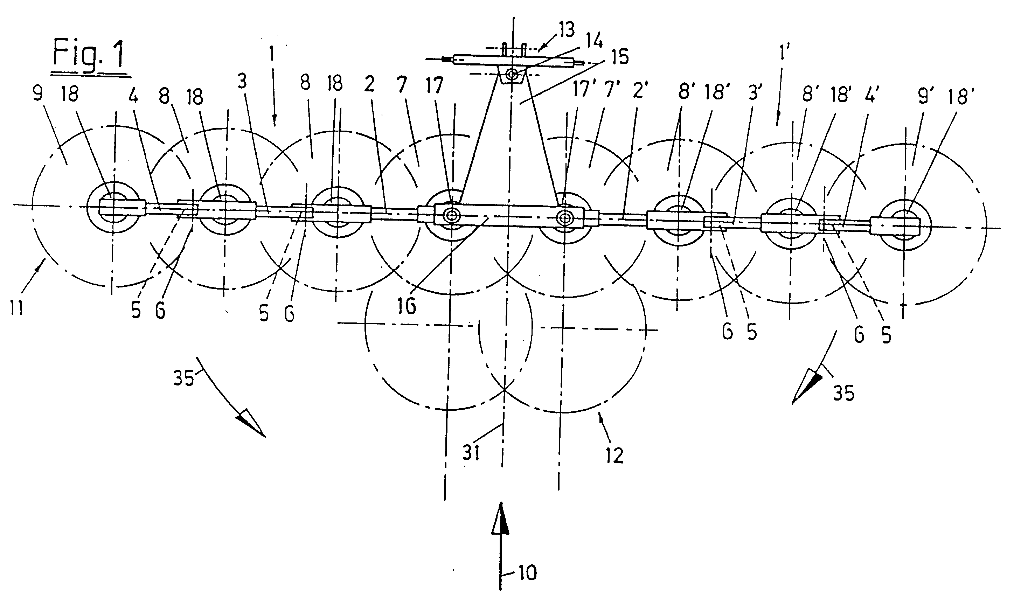

- Fig. 1: eine Draufsicht auf eine Maschine mit 8 Rechrädern, deren Rahmenteile in Arbeitslage, quer zur Fahrtrichtung, schematisch;
- Fig. 2: eine Teilansicht der Maschine nach Fig. 1 von hinten, mit den beiden innersten Rechrädern, schematisch;
- Fig. 3: eine Seitenansicht des innersten Maschinenrahmenteiles mit einem Teil des Zugbalkens in Transportstellung, den mittleren Maschinenrahmenteil hochgeschwenkt angedeutet, schematisch;
- Fig. 4: eine Teilansicht einer Maschine mit einem modifizierten, innersten Rechradgetriebe, von hinten, mit dem Mittelrahmen bis zum Hauptgetriebe, schematisch;
- Fig. 5: die Antriebsanordnung der Maschine nach Fig. 4 in Draufsicht, den Antriebsstrang in Arbeitslage angedeutet.

Eine Heuwerbungsmaschine besitzt einen in Arbeitslage 11 quer zur Fahrtrichtung 10 ausgerichteten Maschinenrahmen, der aus einem Mittelrahmen 16 und an diesem beiderseits gelagerten Maschinenrahmenseitenteilen 1,1' besteht.

Am Mittelrahmen 16 ist ein nach vorne gerichteteter Zugbalken 15 fest angebracht, der um eine aufrechte Achse 14, seitlich verschwenkbar gelagert, mit einer Verbindungsvorrichtung 13 für den Anschluß an ein Zugfahrzeug verbunden ist.

An dem Mittelrahmen 16 sind beiderseits die Maschinenrahmenseitenteile 1,1' über je ein Zwischenstück 24 angelenkt, das am Mittelrahmen 16 um eine Hochachse 22 verdrehbar und am innnersten Rechradgetriebe 17,17' des innersten Rechrades 7,7' des innersten Maschinenrahmenteiles 2,2' um eine in Arbeitslage 11 des Maschinenrahmens in Fahrtrichtung 10 ausgerichtete, liegende Schwenkachse 25 schwenkbar gelagert ist.

Die Maschinenrahmenseitenteile 1,1' sind mit den innersten Maschinenrahmenteilen 2,2' am Mittelrahmen 16 für die Bodenanpassung höhenverschwenkbar angelenkt und in eine zur Arbeitslage 11 um 90° nach hinten verschwenkte Transportlage 12 verdrehbar gelagert.
Mit den innersten Maschinenrahmenteilen 2,2' sind nach außen zu mittlere Maschinenrahmenteile 3,3' und an diesen äußere Maschinenrahmenteile 4,4' mit Gelenken 5 um liegende Achsen 6, zur Bodenanpassung höhenverschwenkbar, verbunden.

An das innerste Rechrad 7,7' jedes Maschinenrahmenteiles 2,2' schließt am inneren Ende des Maschinenrahmenteiles 2,2' ein mittleres Rechrad 8,8' an.
An den mittleren Maschinenrahmenteilen 3,3' sind jeweils weitere mittlere Rechräder 8,8' und an den äußeren Maschinenrahmenteilen 4,4' ist je ein äußeres Rechrad 9,9' angebracht.

Die innersten Rechräder 7,7' sind mit den innersten Rechradgetrieben 17,17' und die mittleren und äußeren Rechrädern 8,8'und 9,9' sind mit den Rechradgetrieben 18,18' an den Maschinenrahmenteilen 2,2',3,3',4,4' befestigt.

An den Rechradachsen 32 sind die Rechräder drehbar gelagert und werden von den Rechradgetrieben angetrieben.
Die Rechradachsen 32 stützen sich über Stützräder 33 auf dem Boden ab. Die Rechräder tragen Rechradarme 34, die mit Rechzinken bestückt sind.

Die Rechradgetriebe 17,17'und 18,18' eines jeden Maschinenrahmenseitenteiles 1,1' sind untereinander über Antriebswellen auf Antrieb verbunden, die in den Maschinenrahmenteilen 2,2',3,3',4,4' geführt sind.

Das innerste Rechradgetriebe 17,17' ist als Verdrehgetriebe 27 ausgebildet, das aus einem unten liegenden verdrehbaren Getriebeteil 29, der an dem Zwischenstück 24 verdrehbar gelagert ist und mit einem oben liegenden, unverdrehbar angeordneten Getriebeteil 28 verdrehgelagert verbunden, der mit einer Halterung 30 an dem Mitelrahmen 16 unverdrehbar festgelegt ist.

Auf diese Weise wird die gleichbleibende Zuordnung der Antriebskupplung 26,26', in Form eines Gelenkwellenanschlusses, des innersten Rechradgetriebes 17,17' zu der Antriebskupplung 21,21', in Form eines Gelenkwellenanschlusses, des Hauptgetriebes 19 hergestellt, die mit einer Antriebsverbindung 23,23', in Form einer Gelenkwelle, verbunden sind.

Das Hauptgetriebe 19 ist mit einem nach vorne gerichteten Gelenkwellenanschluß 20 versehen, der für den Antrieb von einem Zugfahrzeug aus vorgesehen ist.

Das Hauptgetriebe 19 ist in der Längsmittelebene 31 der Maschine zwischen den innersten Rechradgetrieben 17,17' an dem Zugbalken 15 befestigt.

Die Hochachse 22 des Zwischenstückes 24 fluchtet mit der Antriebsachse des innersten Rechrades 7,7' und schneidet die liegende Schwenkachse 25 des Zwischenstückes 24.

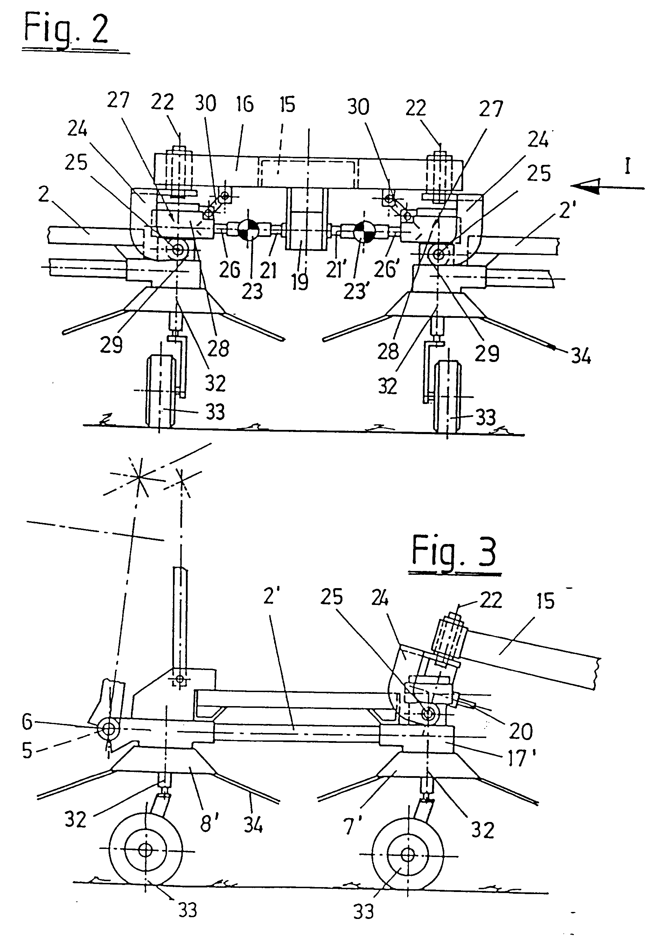

Beim Verschwenken der Maschinenrahmenseitenteile 1,1' nach hinten wird durch das Aufrichten der in Arbeitslage nach vorne geneigten Rechräder 7,7' und 8,8' des innersten Maschinenrahmenteiles 2,2' der Mittelrahmen 16 mit dem Zugbalken 15 angehoben, wie in Fig. 3 dargestellt ist.

Der anschließende mittlere Maschinenrahmenteil 3,3' ist um die Gelenkachse 6 des Gelenkes 5 nach oben verschwenkt, wie in Fig. 3 teilweise angedeutet; ebenso angedeutet ist die Verschwenkung des äußeren Maschinenrahmenteiles 4,4'.

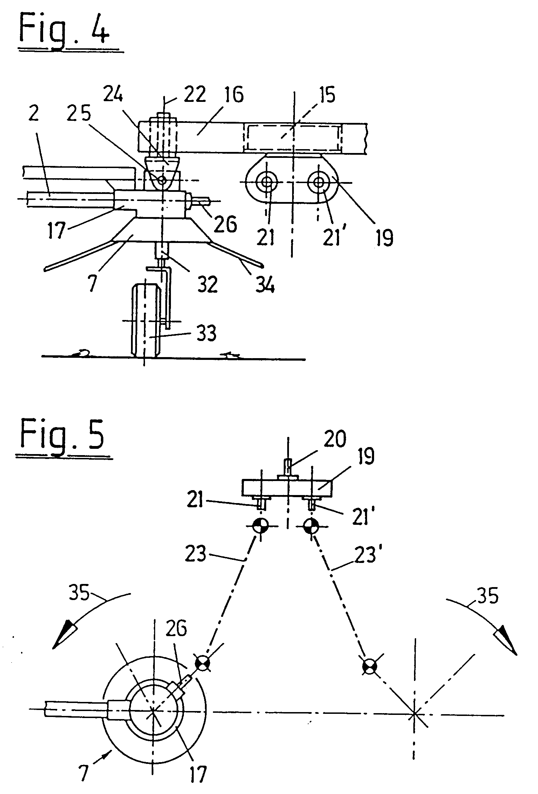

In Fig. 4 ist ein abgewandeltes innerstes Rechradgetriebe 17 des linken Maschinenrahmenseitenteils 1 mit dem innersten Maschinenrahmenteil 2 und dem innersten Rechrad 7 wiedergegeben.

Dieses abgewandelte Rechradgetriebe 17 ist mit einem zusätzlichen Kegelzahnrad versehen, das mit der dargestellten Antriebskupplung 26, in Form eines Gelenkwellenanschlusses, auf Antrieb verbunden ist.

Dieser Gelenkwellenanschluß ist über die Antriebsverbindung 23, in Form einer Gelenkwelle, mit der linken Antriebskupplung 21, in Form eines Gelenkwellenanschlusses, des Hauptgetriebes 19 verbunden.

Beim Verdrehen des Rechradgetriebes 17 verstärkt sich die Abwinkelung der Gelenkwelle sehr stark.

Die Antriebkupplungen 21,21', in Form von Gelenkwellenanschlüssen, des Hauptgetriebes 19 sind parallel zueinander angeordnet, während die Antriebskupplungen 26,26', in Form von Gelenkwellenanschlüssen, der beiden innersten, abgewandelten Rechradgetriebe 17,17', schräg nach vorne zur Mitte hin angeordnet sind, sodaß sich in der Arbeitslage 11 des Maschinenrahmens eine günstige Abwinkelung der Gelenkwellen ergibt.

Die Abwinkelung der Gelenkwellen in nach hinten verschwenkter Transportlage 12 der innersten Maschinenrahmenteile 2,2' ist in Fig. 5 angedeutet.

Das innerste Rechradgetriebe 17,17' ist von oben vom Zwischenstück 24 übergriffen und an diesem schwenkbar gelagert, wobei die Zuordnung dieser liegenden Schwenkachse 25 und der Hochachse 22 des Zwischenstückes 24 der bereits beschriebenen Anordnung entspricht.

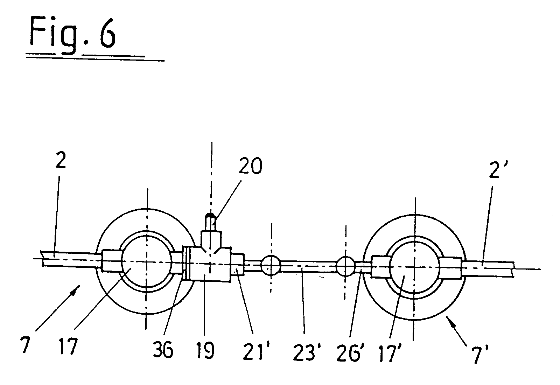

In Fig. 6 ist eine andere, abgewandelte Ausführungsform des Hauptgetriebes dargestellt.

Das innerste Rechradgetriebe 17 des linken, innersten Rechrades 7 ist mit dem Hauptgetriebe 19 über eine Flanschverbindung 36 lösbar verbunden, wobei eine innere Antriebsverbindung mit einer, nicht dargestellten, in den beiden Getrieben lagefest gelagerten Getriebewelle hergestellt ist.

Das Hauptgetriebe 19 ist dabei unterhalb des Mittelrahmens 16 des Maschinenrahmens angebracht und die verbleibende Antriebskupplung 21' ist auf die Antriebskupplung 26' des rechten, innersten Rechradgetriebes 17' hin ausgerichtet.

Es ist möglich, ein einziges Getriebegehäuse für das innerste Rechradgetriebe 17 und für das Hauptgetriebe 19 vorzusehen, dessen Lage und Ausrichtung am Mittelrahmen 16 der Ausführungsform mit Flanschverbindung entspricht.

Die beiden innersten Rechradgetriebe 17,17' sind mit ihrem verdrehbaren Getriebeteil 29 mit den beiden Maschinenrahmenteilen 2,2' verbunden, durch die der Antrieb für die Rechradgetriebe 18,18' der mittleren Rechräder 8,8' und weiter der äußeren Rechräder 9,9' verläuft.

Die Antriebsverbindung 23' zwischen dem Hauptgetriebe 19 und dem anderen, rechten innersten Rechradgetriebe 17' erfolgt über eine unterhalb des Mittelrahmens 16 angeordneten Gelenkwelle, die mit der Antriebskupplung 21' des Hauptgetriebes 19 und mit der Antriebskupplung 26' des rechten, innersten Rechradgetriebes 17' auf Antrieb verbunden ist.

### Legende

- 1,1': Maschinenrahmenseitenteil
- 2,2': innerste Maschinenrahmenteile
- 3,3': mittlere Maschinenrahmenteile
- 4,4': äußere Maschinenrahmenteile
- 5: Gelenk zwischen zwei benachbarten Maschinenrahmenteilen 2,3,4 und 2',3',4'
- 6: liegende Achse des Gelenkes 5
- 7,7': innerste Rechräder
- 8,8': mittlere Rechräder
- 9,9': äußere Rechräder
- 10: Fahrtrichtung
- 11: Arbeitslage des Maschinenrahmens
- 12: Transportlage des Maschinenrahmens
- 13: Verbindungsvorrichtung für ein Zugfahrzeug
- 14: aufrechte Achse zwischen Zugbalken 15 und Verbindungsvorrichtung 13
- 15: Zugbalken
- 16: Mittelrahmen des Maschinenrahmens
- 17,17': innerste Rechradgetriebe der innersten Rechräder 7,7'
- 18,18': Rechradgetriebe der mittleren und äußeren Rechräder 8,8' und 9,9'
- 19: Hauptgetriebe
- 20: Gelenkwellenanschluß des Hauptgetriebes 19 für den Antrieb durch ein Zugfahrzeug
- 21,21': Antriebskupplung des Hauptgetriebes 19 für die Antriebsverbindungen 23,23' für die innersten Rechradgetriebe 17,17'
- 22: Hochachse des Mittelrahmens 16, zum Verschwenken der Maschinenrahmenseitenteile 1,1'
- 23,23': Antriebsverbindungen für die innersten Rechräder 17,17'
- 24: Zwischenstück, um die Hochachse 22 und die liegende Schwenkachse 25 gelenkig gelagert
- 25: liegende Schwenkachse des innersten Maschinenrahmenteils 2,2'
- 26,26': Antriebskupplungen für die Antriebsverbindungen 23,23' der innersten Rechradgetriebe 17,17'
- 27: Verdrehgetriebe der innersten Rechradgetriebe 17,17'
- 28: unverdrehbarer Getriebeteil des Verdrehgetriebes 27
- 29: verdrehbarer Getriebeteil des Verdrehgetriebes 27
- 30: Halterung oder Anschlag für den unverschwenkbaren Getriebeteil 28 des Verdrehgetriebes 27
- 31: Längsmittelebene des Maschinenrahmens
- 32: Rechradachsen der Rechräder 7,7',8,8',9,9'
- 33: Stützräder der Rechradachsen 32
- 34: Rechradarme
- 35: Schwenkrichtung
- 36: Flanschverbindung zwischen dem einen der beiden innersten Rechradgetriebe 17 oder 17' und dem Hauptgetriebe 19

## Patentansprüche

1. Heuwerbungsmaschine mit einem, im wesentlichen quer zur Fahrtrichtung ausgerichteten Maschinenrahmen, bestehend aus mehreren Maschinenrahmenteilen, die um liegende Achsen mit Gelenken höhenverschwenkbar verbunden sind und an denen mehr als sechs Rechräder, die, zumindest in Arbeitslage, mit Tasträdern auf dem Boden abgestützt sind, mit ihren Rechradgetrieben befestigt sind und die in zwei Maschinenrahmenseitenteilen beiderseits an einem Mittelrahmen um eine Hochachse von der Arbeitslage, quer zur Fahrtrichtung, in eine Transportlage nach hinten verschwenkbar sind und deren untereinander mit Antriebswellen verbundenen Rechradgetriebe von einem gemeinsamen Hauptgetriebe aus angetrieben sind, das von einem Zugfahrzeug aus antreibbar, am Mittelrahmen befestigt ist, an dem nach vorne zu ein Zugbalken angebracht ist, der seinerseits, vorzugsweise um eine aufrechte Achse seitlich verschwenkbar, angeordnet ist und die beiden Maschinenrahmenseitenteile (1,1') mit den innersten Maschinenrahmenteilen (2,2') über je ein Zwischenstück (24) mit dem Mittelrahmen (16) verbunden sind, wobei das Zwischenstück (24) an dem Mittelrahmen (16) und an dem jeweils zugeordneten Maschinenrahmenteil (2,2') angelenkt ist und die beiden innersten Rechradgetriebe (17,17') der innersten Rechräder (7,7') über Antriebsverbindungen (23,23') mit dem am Mittelrahmen (16) oder am Zugbalken (15) befestigten Hauptgetriebe (19) antreibbar verbunden sind, **dadurch gekennzeichnet, daß** das Zwischenstück (24) über eine Hochachse (22) verdrehbar und über eine, in Arbeitslage (11) des Maschinenrahmens in Fahrtrichtung (10) ausgerichtete, liegende Schwenkachse (25) verschwenkbar mit dem Mittelrahmen (16) und mit dem zugeordneten innersten Maschinenrahmenteil (2,2') verbunden ist.

2. Heuwerbungsmaschine nach Anspruch 1, dadurch gekennzeichnet, daß das Zwischenstück (24) am Mittelrahmen (16) um die Hochachse (22) verdrehbar gelagert ist und vorzugsweise als Gabel ausgebildet das innerste Rechradgetriebe (17,17') von oben oder seitlich übergreift, und an diesem über die liegende Schwenkachse (25) verschwenkbar gelagert ist.

3. Heuwerbungsmaschine nach einem der Ansprüche 1 oder 2, dadurch gekennzeichnet, daß die liegende Schwenkachse (25) des Zwischenstückes (24) am innersten Maschinenrahmenteil (2,2') die Hochachse (22) des Zwischenstückes (24), vorzugsweise im rechten Winkel, schneidet oder zumindest kreuzt.

4. Heuwerbungsmaschine nach einem der Ansprüche 1 bis 3, dadurch gekennzeichnet, daß die Hochachse (22) und die Antriebsachse des innersten Rechrades (7,7') fluchten.

5. Heuwerbungsmaschine nach einem der Ansprüche 1 bis 4, dadurch gekennzeichnet, daß die Hochachse (22) des verdrehbaren Zwischenstückes (24) im Bereich der Antriebsachse des innersten Rechrades (7,7'), parallel zu dieser ausgerichtet, angeordnet ist.

6. Heuwerbungsmaschine nach einem der Ansprüche 1 bis 5, dadurch gekennzeichnet, daß die Antriebskupplungen (26, 26') der innersten Rechradgetriebe (17,17') der innersten Rechräder (7,7') an Antriebsverbindungen (23,23') angeschlossen und von diesen angetrieben sind, die in Form von parallel zueinander angeordneten, nach vorne gerichteten Antriebswellen mit Antriebskupplungen (21,21') des Hauptgetriebes (19) verbunden sind.

7. Heuwerbungsmaschine nach einem der Ansprüche 1 bis 6, dadurch gekennzeichnet, daß die innersten Rechradgetriebe (17,17') der innersten Rechräder (7,7') mit Antriebsverbindungen (23,23') angetrieben sind, die in Form von, im wesentlichen von vorne nach hinten verlaufenden, biegeschlaffen Antriebsmittel, wie Zahnriemen, Ketten oder dgl., mit den Antriebskupplungen (21,21' und 26,26'), in Form von Riemen- oder Kettenrädern, an den innersten Rechradgetrieben (17,17') und dem Hauptgetriebe (19) auf Antrieb verbunden sind.

8. Heuwerbungsmaschine nach einem der Ansprüche 1 bis 6, dadurch gekennzeichnet, daß die innersten Rechradgetriebe (17,17') der innersten Rechräder (7,7') mit Antriebsverbindungen (23,23') angetrieben sind, die in Form von, im wesentlichen von vorne nach hinten verlaufenden, biegeschlaffen Antriebsmittel, wie Zahnriemen, Ketten oder dgl., mit den, an nach oben aus den Getrieben herausgeführten Getriebewellen, befestigten Antriebskupplungen (21,21' und 26,26'), in Form von Riemen- oder Kettenrädern, an den innersten Rechradgetrieben (17,17') und dem Hauptgetriebe (19) auf Antrieb verbunden sind.

9. Heuwerbungsmaschine nach einem der Ansprüche 1 bis 8, dadurch gekennzeichnet, daß das innerste Rechradgetriebe (17,17') als Winkelgetriebe ausgebildet ist, welches das innerste Rechrad (7,7') und die Antriebswelle für die Rechradgetriebe (18,18') der mittleren und äußeren Rechräder (8,8' und 9,9') antreibt und mit einem Kegelzahnrad versehen ist, das mit einer Antriebskupplung (26,26'), in Form eines Gelenkwellenanschlusses, für die Antriebsverbindung (23,23'), in Form einer Gelenkwelle, zum Anschluß an die zugeordnete Antriebskupplung (21,21'), in Form eines Gelenkwellenanschlusses, des Hauptgetriebes (19) verbunden ist.

10. Heuwerbungsmaschine nach einem der Ansprüche 1 bis 6, dadurch gekennzeichnet, daß das innerste Rechradgetriebe (17,17') als Verdrehgetriebe (27) ausgebildet ist, dessen verdrehbarer Getriebeteil (34) die Antriebswelle für die weiteren Rechradgetriebe (18,18') antreibt und an einem unverdrehbaren Getriebeteil (28) drehgelagert ist, der mit einer Halterung oder einem Anschlag (29) am Mittelrahmen (16) gegen Verdrehung fixiert ist und eine Antriebskupplung (26,26'), vorzugsweise in Form eines Gelenkwellenanschlusses, aufweist für die Antriebsverbindung (23,23'), vorzugsweise in Form einer Gelenkwelle, die mit der Antriebskupplung (21,21'), vorzugsweise in Form eines Gelenkwellenanschlusses, des Hauptgetriebes (19) verbunden ist und das innerste Rechrad (17,17') antreibt.

11. Heuwerbungsmaschine nach einem der Ansprüche 1 bis 11, dadurch gekennzeichnet, daß eines der innersten Rechradgetriebe (17 oder 17') mit dem Hauptgetriebe (19) über eine Flanschverbindung (36) verbunden ist und die Antriebsverbindung (23 oder 23') zwischen dem Hauptgetriebe (19) und diesem innersten Rechradgetriebe (17 oder 17') als innere Antriebsverbindung zwischen diesen Getrieben mit einer lagefest gelagerten Getriebewelle hergestellt ist und daß die Antriebsverbindung (23' oder 23) zu dem anderen Rechradgetriebe (17' oder 17) der beiden innersten Rechradgetriebe (17,17') zwischen dessen Antriebskupplung (26' oder 26) und der Antriebskupplung (21' oder 21) des Hauptgetriebes (19) gelenkig, insbesonders mit einer Gelenkwelle, vorzugsweise unterhalb des Mittelrahmens (16) verlaufend und im wesentlichen rechtwinkelig zu der Längsmittelebene (31) des Maschinenrahmens ausgerichtet, hergestellt ist.

12. Heuwerbungsmaschine nach Anspruch 11, dadurch gekennzeichnet, daß das innerste Rechradgetriebe (17 oder 17'), das mit dem Hauptgetriebe (19) über eine innere Antriebsverbindung verbunden ist, mit diesem in einem gemeinsamen Getriebegehäuse angeordnet ist.

13. Heuwerbungsmaschine nach Anspruch 11 oder 12, dadurch gekennzeichnet, daß das Hauptgetriebe (19) oder der das Hauptgetriebe enthaltende Teil des gemeinsamen Getriebegehäuses unterhalb und insbesonders seitlich zur Längsmittelebene (31) des Maschinenrahmens, versetzt angebracht oder angeordnet ist und der Gelenkwellenanschluß (20) für den Antrieb von einem Zugfahrzeug aus, vorzugsweise gerade, nach vorne ausgerichtet ist.

14. Heuwerbungsmaschine nach einem der Ansprüche 1 bis 8 und 10, dadurch gekennzeichnet, daß die Antriebskupplungen (21, 21'), in Form von Gelenkwellenanschlüssen, des Hauptgetriebes (19) für den Anschluß der Antriebsverbindungen (23,23'), in Form von Gelenkwellen, die an den Antriebskupplungen (26,26'), in Form von Gelenkwellenanschlüssen, der innersten Rechradgetriebe (17,17') angeschlossen sind, je nach Lage der Getriebe zueinander, parallel nebeneinander an der gleichen Seite oder winkelig zueinander an benachbarten Seiten oder im gestreckten Winkel an gegenüberliegenden Seiten des Hauptgetriebes (19) angeordnet sind, an dem nach vorne gerichtet ein Gelenkwellenanschluß (20), für den Antrieb von einem Zugfahrzeug aus, angebracht ist.

15. Heuwerbungsmaschine nach einem der Ansprüche 1 bis 10 und 14, dadurch gekennzeichnet, daß das Hauptgetriebe (19) in der Längsmittelebene (31) des Maschinenrahmens, am Mittelrahmen (16) oder am Zugbalken (15), vorzugweise unterhalb, insbesonders im Bereich zwischen der Verbindungsvorrichtung (13) für das Zugfahrzeug bis zwischen die beiden innersten Rechradgetriebe (17,17'), befestigt ist.

16. Heuwerbungsmaschine nach einem der Ansprüche 1 bis 15, dadurch gekennzeichnet, daß der innerste Maschinenrahmenteil (2,2') die Rechradgetriebe (17,17') und (18,18') der innersten Rechräder (7,7') und der darauf folgenden, benachbarten Rechräder (8,8') trägt.

## Claims

1. Haymaking machine with a machine frame directed transverse into the direction of travel consisting of a plurality of machine frameparts mechanically connected by joints pivotable by horizontal axes into a vertical direction and with more than six raking wheels attached to by the raking wheel gears thereof and supported at least in working position by support wheels to the ground and said raking wheels beeing formed in two lateral machine frameparts which are swivel-mounted to a middle frame by a vertical axis pivotable from a working position to a transport position oblique to the direction of travel and behind said middle frame which raking wheel gears are mechanically coupled together with driving shafts by means of a main gear attached to the middle frame and driven by a drawing vehicle and at said middle frame beeing attached to the front side a drawbar preferably lateral swiveling mounted by an upright axle and said mentioned two lateral machine frame parts (1,1') beeing coupled to the innermost positioned machineframe parts (2,2') which are mounted to the middle frame (16) by means of an intermediate part (24) apiece said intermediate part (24) beeing pivotably attached to the middle frame (16) and to the adjoined machineframe part (2,2') and that the two innermost raking wheel gears (17,17') of the innermost situated raking wheels (7,7') beeing coupled by driving-connections (23,23') to the main gear (19) mounted to the middle frame (16) or to the drawbar (15), **characterised in that** the said intermediate part (24) is rotatable around an upright axis (22) and pivotable linked by a horizontal sviwel axle (25) which is directed into the direction of travel to the middle frame (16) and to the adjoined innermost positioned machineframe parts (2,2').

2. Haymaking machine according to claim 1, characterised in that intermediate positioned Part (24) is rotatably adjoined to the middle frame (16) around the upright axis (22) and preferably formed as a fork overlapping the innermost raking wheel gear (17,17') from above oder from the sides and to said innermost raking wheel gear (17, 17') pivotally-mounted by means of the horizontal swivel-axle (25).

3. Haymaking machine according to claim 1 or 2, characterised in that the horizontal swivel-axle (25) of the intermediate part (24) linked to the innermost machineframe part (2,2') cuts or at least crosses the upright axis (22) of the said intermediate part (24) preferably perpendicularly.

4. Haymaking machine according to claim 1-3, characterised in that the upright axis (22) and the driving axle of the innermost raking wheel (7,7') are directed in a base-line.

5. Haymaking machine according to claim 1-4, characterised in that the upright axis (22) of the rotatable intermediate positioned part (24) is directed in parallel to the innermost raking wheel (7,7') in the range thereof.

6. Haymaking machine according to claim 1-5, characterised in that the drive-couplings (26,26') of the innermost raking wheel gears (17,17') of the innermost raking wheels (7,7') are coupled to the driving-connections (23,23') and driven by said driving-connections (23,23') consisting of driving-axles arranged in parallel and directed to the front of the machine and coupled to driving-couplings (21,21') of the main gear (19).

7. Haymaking machine according to claim 1-6, characterised in that the innermost raking wheel gears (17,17') of the innermost raking wheels (7,7') are driven by driving-connections (23,23') consisting of pliable driving-means, such as cog belts, chains or simil., substantially extending from the front of the machine to the rear and beeing coupled to driving couplings (21,21' and 26,26') consisting of belt wheels or chain wheels attached to the innermost raking wheel gears (17,17') and mechanically linked in driving condition to the main gear (19).

8. Haymaking machine according to claim 1-7, characterised in that the innermost raking wheel gears (17,17') of the innermost raking wheels (7,7') are driven by driving-connections (23,23') consisting of pliable driving-means, such as cog belts, chains or simil., substantially extending from the front of the machine to the rear and beeing coupled to driving couplings (21,21' and 26,26') consisting of belt wheels or chain wheels attached to the innermost raking wheel gears (17,17') which are mounted to gear-axles conducted through the top of the gears and mechanically linked in driving condition to the main gear (19).

9. Haymaking machine according to claim 1-8, characterised in that the innermost raking wheel gears (17,17') consists of an angular gear driving the innermost raking wheel (7,7') and the driving shaft of the raking wheel gears (18,18') of the raking wheels (8,8') positioned in the middle between the raking wheels (7,7' and 9,9') of the machine and is fitted with a bevel wheel coupled to a driving coupling (26,26') consisting of a telescoping shaft coupling mechanically linking to the adjoined driving-connections (23,23') consisting of a telescoping shaft for the coupling of the adjoined driving couplings (21,21') consisting of a telescoping shaft coupling to the main gear (19).

10. Haymaking machine according to claim 1-6, characterised in that the innermost raking wheel gears (17,17') consists of a torque gear (27) with a partial rotatable gear part (34) driving the driving shaft of the afterjoined raking wheel gears (18,18') which is rotatably attached to a unrotatable gear part (28) beeing counter-rotatably fixed by a clamp or a stop (29) of the middle frame (16) and is equipped with a driving coupling (26,26') preferably consisting of a telescoping shaft coupling forming the driving-connection (23,23') preferably consisting of a telescoping shaft coupled to a driving coupling (21, 21') preferably consisting of a telescoping shaft coupling of the main gear (19) and is driving the innermost raking wheel (7,7').

11. Haymaking machine according to claim 1-10, characterised in that one of the innermost raking wheel gears (17 or 17') is coupled to the main gear (19) by means of a flange-conection and the driving-connection (23,23') is achieved between the main gear (19) and the abovementioned innermost raking wheel gear (17 or 17') by an stationary cushioned gear shaft forming an inner driving coupling and that said driving-connection (23' or 23) to other raking wheel gears (17' or 17) of the two innermost raking wheel gears (17,17') is achieved articulating between the driving coupling (26' or 26) and the a driving coupling (21' or 21) of the main gear (19) preferably extending beneath the middle frame and substantially directed rectangular to the longitudinal middle plane (31) of the machine frame.

12. Haymaking machine according to claim 11, characterised in that of the innermost raking wheel gear (17 or 17') which is mechanically connected to the main gear (19) by an inner inner driving coupling beeing arranged with said innermost raking wheel gear (17 or 17') in a combined gear-housing.

13. Haymaking machine according to claim 11 or 12, characterised in that the main gear (19) or that part of the combined gear-housing containing the main gear is situated beneath and particularly displaced aside of the longitudinal middle plane (31) of the machine frame and the telescoping shaft coupling (20) of the drive achieved from a pulling vehicle is directed preferably straight in frontal direction.

14. Haymaking machine according to claim 1-8, characterised in that the driving couplings (21,21') of the main gear (19) consisting of telescoping shaft couplings for the coupling of the driving-connections (23,23') consisting of telescoping shafts beeing mechanically connected to the driving couplings (26,26') consisting of telescoping shaft couplings of the innermost raking wheel gears (17, 17'), arranged relativ to the situation of the gears at the same side in parallel one to another or in an angel at sides turned towards or in a straight angel at opposite sides of the main gear (19) provided with a telescoping shaft coupling (20), directed staight forward, for beeing driven by a pulling vehicle.

15. Haymaking machine according to claim 1-8, characterised in that the main gear (19) is fixed in the longitudinal middle plane (31) of the machine frame to the middle frame (16) 0r to the drawbar (15) preferably beneath thereof and especially in the range from the coupling appliance (13) for the pulling vehicle to the range between the both innermost raking wheel gears (17,17').

16. Haymaking machine according to claim 1-8, characterised in that the innermost machineframe part (2,2') conveys, the raking wheel gears (17,17') and (18,18') of the innermost raking wheels (7,7') and of the raking wheels (8,8') positioned in the middle between the raking wheels (7,7' and 9,9') of the machine.

## Revendications

1. Machine de fenaison comportant un cadre, qui est orienté essentiellement transversalement par rapport à la direction de déplacement, constitué par plusieurs éléments de cadre de machine, qui sont reliés à des articulations de manière à pouvoir pivoter verticalement autour d'axes horizontaux et auxquels plus de six roues de ratissage, qui prennent appui, au moins dans la position de travail, sur le sol, au moyen de roues d'appui, sont fixées au moyen de leurs mécanismes et qui, dans deux parties latérales du cadre de la machine, des deux côtés d'un cadre central, peuvent pivoter vers l'arrière autour d'un axe vertical, depuis la position de travail, transversalement par rapport à la direction de déplacement, pour venir dans une position de transport et dont les mécanismes, reliés entre eux par des arbres d'entraînement, sont entraînés à partir d'un mécanisme principal commun, qui est fixé de manière à pouvoir être entraîné par un véhicule tracteur, sur le cadre central, sur l'avant duquel est montée une barre d'attelage, qui pour sa part est montée de façon à pouvoir pivoter de préférence latéralement autour d'un axe vertical, et dans laquelle les deux parties latérales (1, 1') du cadre de la machine sont reliées et ce par les parties les plus intérieures (2, 2') du cadre de la machine, au cadre central (16) à l'aide d'une pièce intercalaire respective (24), et dans laquelle la pièce intercalaire (24) est articulée sur le cadre central (16) et sur la partie respectivement associée (2, 2') du cadre de la machine, et les deux transmissions les plus intérieures (17, 17') des roues de ratissage (7, 7') les plus intérieures sont reliées de manière à pouvoir être entraînées, par l'intercalaire de liaisons d'entraînement (23, 23'), au mécanisme principal (19) qui est fixé sur le cadre central (16) ou sur la barre d'attelage (15), caractérisée en ce que la pièce intercalaire (24) est reliée au cadre central (16) et à la partie la plus intérieure associée (2, 2') du cadre de la machine, de manière à pouvoir pivoter autour d'un axe vertical (22) et de manière à pouvoir basculer autour d'un axe horizontal de basculement (25) qui est orienté dans la direction de déplacement (10) lorsque le cadre de la machine est dans la position de travail (11).

2. Machine de fenaison selon la revendication 1, caractérisée en ce que la pièce intercalaire (24) est montée sur le cadre central (16) de manière à pouvoir tourner autour de l'axe vertical (22) et est agencée de préférence sous la forme d'une fourche, qui s'engage a partir du haut ou latéralement par dessus le mécanisme le plus intérieur (17, 17') des roues de ratissage et montée sur ce mécanisme de manière à pouvoir basculer autour de l'axe horizontal de basculement (25).

3. Machine de fenaison selon l'une des revendications 1 ou 2, caractérisée en ce que l'axe horizontal de basculement (25) de la pièce intercalaire (24) la partie la plus intérieure (2, 2') du cadre de la machine recoupe ou au moins croise l'axe vertical (22) de la pièce intercalaire (24), de préférence à angle droit.

4. Machine de fenaison selon l'une des revendications 1 à 3, caractérisée en ce que l'axe vertical (22) et l'axe d'entraînement de la roue de ratissage la plus intérieure (7, 7') sont alignés.

5. Machine de fenaison selon l'une des revendications 1 à 4, caractérisée en ce que l'axe vertical (22) de la pièce intercalaire rotative (24) est disposé au voisinage de l'axe d'entraînement de la roue de ratissage la plus intérieure (7, 7'), en étant orienté parallèlement à cette roue.

6. Machine de fenaison selon l'une des revendications 1 à 5, caractérisée en ce que les accouplements d'entraînement (26, 26') des mécanismes les plus intérieurs (17, 17') des roues de ratissage les plus intérieures (7, 7') sont raccordés à et sont entraînés par des liaisons d'entraînement (23, 23'), qui, sous la forme d'arbres d'entraînement parallèles entre eux et dirigés vers l'avant, sont reliées à des accouplements d'entraînement (21, 21') du mécanisme principal (19).

7. Machine de fenaison selon l'une des revendications 1 à 6, caractérisée en ce que le mécanisme le plus intérieur (17, 17') des roues de ratissage les plus intérieures (7, 7') est entraîné par des liaisons d'entraînement (23, 23'), qui sous la forme de moyens d'entraînement aisément flexibles qui s'étendent essentiellement de l'avant vers l'arrière, comme des courroies dentées, des chaînes ou analogues, sont reliées par les accouplements d'entraînement (21, 21' et 26, 26'), sous la forme de poulies ou de roues à chaîne, aux mécanismes les plus intérieurs (17, 17') des roues de ratissage et au mécanisme principal (19), pour les entraîner.

8. Machine de fenaison selon l'une des revendications 1 à 6, caractérisée en ce que les mécanismes les plus intérieurs (17, 17') des roues de ratissage les plus intérieures (7, 7') sont entraînés par des liaisons d'entraînement (23, 23') qui, sous la forme de moyens d'entraînement aisément flexibles qui s'étendent essentiellement d'avant en arrière, comme par exemple des courroies dentées, des chaînes ou analogues, sont reliées pour leur entraînement, au moyen d'accouplements d'entraînement (21, 21' et 26, 26') qui sont fixés à des arbres de renvoi qui ressortent vers le haut hors des mécanismes et se présentent sous la forme de poulies ou de roues à chaîne, aux mécanismes les plus intérieurs (17, 17') des roues de ratissage et au mécanisme principal (19).

9. Machine de fenaison selon l'une des revendications 1 à 8, caractérisée en ce que le mécanisme le plus intérieur (17, 17') des roues de ratissage est agencé sous la forme d'un mécanisme de renvoi, qui entraîne la roue de ratissage la plus intérieure (7, 7') et l'arbre d'entraînement pour les mécanismes (18, 18') des roues de ratissage centrale et extérieure (8, 8' et 9, 9') et est équipé d'un pignon conique, qui est relié à un accouplement d'entraînement (26, 26') sous la forme d'un raccord d'arbre articulé pour la liaison d'entraînement (23, 23') sous la forme d'un arbre articulé, pour le raccordement à l'accouplement d'entraînement associé (21, 21'), sous la forme d'un raccord d'arbre articulé, du mécanisme principal (19).

10. Machine de fenaison selon l'une des revendications 1 à 6, caractérisé en ce que le mécanisme le plus intérieur (17, 17') des roues de ratissage est agencé sous la forme d'un mécanisme de rotation (27), dont la partie rotative (34) entre l'arbre d'entraînement pour les autres mécanismes (18, 18') des roues de ratissage est montée de manière à pouvoir tourner sur une partie non rotative (28) du mécanisme, qui est bloquée contre toute rotation au moyen d'un dispositif de retenue ou d'une butée (29) sur le cadre central (16) et comporte un accouplement d'entraînement (26, 26'), de préférence sous la forme d'un raccord d'arbre d'articulation pour la liaison d'entraînement (23, 23') de préférence sous la forme d'un arbre d'articulation, qui est relié à l'accouplement d'entraînement (21, 21'), de préférence sous la forme d'un raccord d'arbre d'articulation, du mécanisme principal (19) et entraîne la roue de ratissage la plus intérieure (17, 17').

11. Machine de fenaison selon l'une des revendications 1 à 11, caractérisée en ce que l'un des mécanismes les plus intérieurs (17 ou 17') des roues de ratissage est relié au mécanisme principal (19) par l'intercalaire d'une liaison à bride (36), et la liaison d'entraînement (23 ou 23') entre le mécanisme principal (19) et ce mécanisme le plus intérieur (17, 17') d'une roue de ratissage est établie en tant que liaison intérieure d'entraînement de ces mécanismes, avec un arbre de renvoi monté dans une position fixe, et que la liaison d'entraînement (23' ou 23) est établie avec l'autre mécanisme (17' ou 17) faisant partie des deux mécanismes les plus intérieurs (17, 17') de roues de ratissage, entre l'accouplement d'entraînement (26' ou 26) de ce mécanisme et l'accouplement d'entraînement (21' ou 21) du mécanisme principal (19) d'une manière articulée, notamment avec un arbre articulé, qui s'étend de préférence au-dessous du cadre central (7) et est orienté sensiblement perpendiculairement au plan médian longitudinal (31) du cadre de la machine.

12. Machine de fenaison selon la revendication 11, caractérisée en ce que le mécanisme le plus intérieur (17 ou 17') d'une roue de ratissage, qui est relié au mécanisme principal (19) par l'intercalaire d'une liaison intérieure d'entraînement, est disposé conjointement avec cette dernière dans un boîtier de transmission commun.

13. Machine de fenaison selon la revendication 11 ou 12, caractérisée en ce que le mécanisme principal (19) ou la partie, qui contient le mécanisme principal, du carter commun des mécanismes est disposé ou monté, d'une manière décalée, au-dessous et notamment latéralement par rapport au plan médian longitudinal (31) du cadre de la machine, et le raccord (20) d'arbre articulé pour l'entraînement est orienté de préférence selon une disposition rectiligne, vers l'avant, à partir d'un véhicule tracteur.

14. Machine de fenaison selon l'une des revendications 1 à 8 et 10, caractérisée en ce que les accouplements d'entraînement (21, 21'), sous la forme de raccords d'arbres articulés, du mécanisme principal (19) pour le raccordement des liaisons d'entraînement (23, 23'), sous la forme d'arbres articulés, qui sont raccordés aux accouplements d'entraînement (26, 26'), réalisés sous la forme d'arbres articulés, des mécanismes les plus intérieurs (17, 17') des roues de ratissage sont disposés en fonction de la position réciproque des mécanismes, parallèlement les uns à côté des autres sur le même côté ou perpendiculairement entre eux sur des côtés voisins ou selon un angle conséquent sur des côtés opposés du mécanisme principal (19), sur lequel est monté, vers l'avant, un raccord d'arbre articulé (20), pour l'entraînement à partir d'un véhicule tracteur.

15. Machine de fenaison selon l'une des revendications 1 à 10 et 14, caractérisée en ce que le mécanisme principal (19) est fixé dans le plan médian longitudinal (31) du cadre de la machine, sur le cadre central (16) ou sur la barre d'attelage (15), de préférence au-dessous de et notamment dans la zone présente entre le dispositif de liaison (13) pour le véhicule tracteur, jusque dans une position entre les deux mécanismes les plus intérieurs (17, 17') des roues de ratissage.

16. Machine de fenaison selon l'une des revendications 1 à 15, caractérisée en ce que la partie la plus intérieure (2,2') du cadre de la machine porte les mécanismes (17, 17') et (18, 18') des roues de ratissage les plus intérieures (7, 7') et des roues de ratissage voisines (8, 8'), qui sont disposées à la suite des précédentes.
